# EUROPEAN PATENT SPECIFICATION

(11) **EP 3 137 510 B1**
(45) Date of publication and mention of the grant of the patent: **06.06.2018**
(21) Application number: 15717922.7
(22) Date of filing: 28.04.2015
(51) Int. Cl.: C08F 2/06, C08F 2/44, C09D 5/03

(54) **PROCESS FOR MAKING ACRYLIC POWDER COATING RESIN SYSTEMS**
VERFAHREN ZUR HERSTELLUNG VON ACRYLBESCHICHTUNGSPULVERHARZSYSTEMEN
PROCÉDÉ DE FABRICATION DE SYSTÈMES DE RÉSINE EN POUDRE DE REVÊTEMENT ACRYLIQUE

(30) Priority: 30.04.2014 US 201461986433 P; 11.07.2014 EP 14176750
(43) Date of publication of application: 08.03.2017
(73) Proprietor: Akzo Nobel Coatings International B.V., 6824 BM Arnhem (NL)
(72) Inventor: CINOMAN, Douglas S., Coatsville, PA 19320 (US); LARSON, Gary Robert, Harleysville, PA 19438 (US); WILHELM, Justin E., Shillington, PA 19607 (US)
(74) Representative: Akzo Nobel IP Department
(86) International application number: PCT/EP2015/059118
(87) International publication number: WO 2015/165860

(56) References cited:
- EP-A1- 2 048 116
- US-A1- 2014 050 928

## Description

### TECHNICAL FIELD

This disclosure relates to a process for preparing powder coating resin systems and the powder coating resins and powder coating compositions prepared by said process. More specifically, the disclosure relates to a process for preparing acrylic powder coating resin systems comprising polymerizing one or more acrylic monomers, such as epoxy, hydroxyl or acid functional monomers, in the presence of hydrophobic submicron particles.

### BACKGROUND

The exposed portions of metal wheels and other trim on a speeding car are subjected to flying grit which can abrade its protective coating. A hard and tough film is needed to protect these parts. Further, it is often desirable for the coating to exhibit good clarity where aluminum or forged alloy wheels or trim are used. The film ideally should be non-porous and should exhibit superior adhesion to the metal to prevent the spread of corrosion at the interface of the film and metal (also known as filiform corrosion).

U.S. Pat. Pub. 2009/0192247 to Daly et al. ("Daly") discloses the use of thermosetting acrylic resin powder coating compositions comprising hydrophobic submicron particles as a means to make filiform corrosion resistant cured powder coatings for aluminum, forged alloy or metal substrates. Daly also discloses that the hydrophobic submicron particle is added to the powder coating composition before or during intimate mixing or resin particle agglomeration to form the powder coating composition and becomes part of the powder coating particle or agglomerate, or that a portion of the hydrophobic submicron particles used may be post-blended or dry blended, i.e. as separate particles, with the intimately mixed powder coating composition. U.S. Pat. Pub. 2014/00509285 to Gebauer et al. discloses a hydrophobic submicron rheological assistant blended with a binder and a matting agent to form a homogenous mixture.

European Pat. Pub. EP 2 048 116, to ChemlP B.V., discloses organosilanol-functionalized nanoparticles that are formed in an azeotropic water/solvent mixture and further processed until a desired water content is achieved. More water may be added to the coating composition if desired.

Although conventional powder coating compositions including hydrophobic submicron particles have provided adequate filiform corrosion resistance to date, there remains a need for improved powder coating compositions, particularly for use as clear coat topcoats, for automotive trim or automotive wheel applications, that provide improvements to cured powder coating smoothness, hardness, chemical resistance, weatherability, while maintaining good clarity.

### DETAILED DESCRIPTION

Provided herein is a process for preparing an acrylic powder coating resin system comprising solution polymerizing at least one acrylic monomer in a non-aqueous solvent in the presence of a hydrophobic submicron particle and an initiator, wherein the at least one acrylic monomer is chosen from epoxy functional monomers, acid functional monomers or combinations thereof, and wherein the polymerizing occurs under water-free conditions. The disclosure provides a powder coating resin system formed by solution (co)polymerizing acrylic monomers in the presence of hydrophobic submicron particles in a non-aqueous solvent. Polymerizing acrylic monomers in a non-aqueous solvent in the presence of hydrophobic submicron particles causes the particles to become intimately dispersed in the solution with the growing polymer. It is believed that dispersing hydrophobic submicron particles during synthesis of the resin gives rise to improved clarity, hardness and smoothness in the resulting cured powder coatings, particularly for clear coat or tinted clear coat cured powder coatings. Further, some powder coating resins produced by embodiments of the processes described herein may be particularly useful for cured powder coating compositions that are used in automotive trim and wheel coating applications.

Powder coating resins produced by the processes disclosed herein have been found to improve hardness and smoothness without sacrificing good optical clarity in the cured cured powder coating as compared to cured powder coating compositions that include hydrophobic submicron particles added to the powder raw mix before processing or to the ground powder coating composition during the extrusion step.

Polymerizing the acrylic monomers and the hydrophobic submicron particles under dry, water-free, or substantially water-free conditions may avoid undesirable reactions between the monomer and water. For example, epoxy functional monomers, such as those described in CN 101358097 or KR 958539, would be expected to react with water. Polymerizing the acrylic monomers and the hydrophobic submicron particles under dry, water-free, or substantially water-free conditions may also avoid the formation during polymerization of core/shell structures where the particle provides the core and the polymer forms the shell. Powder coating resin systems formed from such core/shell structures, and the resulting powder coating compositions, form undesirable particles instead of films having a distribution of polymer and particles. In some embodiments, the powder coating compositions may provide clear or tinted cured powder coatings exhibiting improvements to cured powder coating smoothness, hardness, chemical resistance and weatherability, while maintaining good clarity. Further, the cured powder coatings may exhibit excellent filiform corrosion resistance on aluminum or forged alloy substrates, such as automotive wheel or automotive trim substrates. For example, an aluminum or forged alloy substrate may be cleaned and pre-treated, with a zinc phosphate or iron phosphate pretreatment and then coated with a powder coating composition described herein. In addition, the powder coating compositions also form corrosion resistant cured powder coatings on iron, steel, magnesium alloy and brass substrates.

The powder coating compositions include particles having one or more thermosetting acrylic copolymers and one or more intimately dispersed hydrophobic submicron particles. In an embodiment, the one or more hydrophobic submicron particle additives are preferably added as an ingredient during synthesis of the resin in an amount from about 0.01 wt% to about 1.5 wt%, based on the total weight of the powder coating resin system. The one or more acrylic copolymers comprise at least one acrylic monomer chosen from epoxy and/or acid functional acrylic monomers, and preferably hydroxyl functional acrylic monomers.

Suitable hydrophobic submicron particles may include, but are not limited to, particles comprising inorganic oxides and one or more organosilicon compound. Non-limiting examples of organosilicon compounds include oligoorganosilicon compounds, polyorganosilicon compounds, and mixtures thereof. In some embodiments, the organosilicon compound preferably is substantially free of resin reactive groups, that is, epoxy, carboxylic acid, mineral acid, amine, isocyanate, vinyl, or acrylic groups. As used herein, the term "substantially free of resin reactive groups" refers to a molecule or compound that has about 0.1 wt% or less of a functional group that reacts with embodiments of the acrylic copolymers in or as a result of processing and/or curing, based on the total weight of the molecule or compound. Non-limiting examples of preferred organosilicon compounds include polydimethyl siloxane (PDMS), oligodimethyl siloxane, polymethylphenyl siloxane, and oligomethylphenyl siloxane. Alternatively, the organosilicon compound may comprise from about 0.01 wt% to about 7.5 wt% of a silanol (SiOH) group. In some embodiments, suitable inorganic oxide particles may comprise particles or agglomerates that have a total average particle size of from about 0.001 µm (about 1 nanometer) to about 1.0 µm, or, about 0.004 µm or more, in another embodiment, about 0.25 micron or less, and, more preferably, about 0.1 µm or less. Preferably, the inorganic oxide includes fumed silica or metal oxides, such as alumina, or combinations thereof.

Non-limiting example organosilicon compounds that may be used to make hydrophobic submicron particles include polydiorganosiloxanes, polyorganosiloxanes, polydiorganosilazanes or polyorganosilazanes; organosilanes (for example, octyl silane and diorganosilanes); organosilazanes (for example, hexamethylene disilazane); organodisilazanes; oligomers of silanes (for example, pentamethyldisiloxane); organooligosilazanes, and mixtures thereof. As used herein, the term "organo" is defined by a C₁ to C₁₂ alkyl, cycloalkyl, (alkyl)aryl or phenyl group. In some embodiments, the organosilicon compound preferably may be polydimethylsiloxane, poly(methylphenyl)siloxane, or the condensation reaction product of a dihaloalkyl silane or a dihalodialkyl silane (that is, an oligo- or poly-dialkylsiloxane).

In some embodiments, inorganic oxide particles and agglomerates for making the hydrophobic submicron particles disclosed herein may have an average particle size of from about 0.004 µm (about 5 nanometers) to about 1.0 µm, preferably, about 0.2 micron or less, or, about 0.1 µm or less, or, more preferably, about 0.075 µm or less. In some embodiments, the inorganic oxide may be or include silica or fumed silica; metal oxides (for example, aluminum oxides, zinc oxides, titanium oxides, and magnesium oxides); silicates (for example, alkali metal silicates); and organic-inorganic oxide composites (for example, the condensation reaction products of (di)alkoxy silanes with silica or silicates), and mixtures thereof. Preferably, the one or more hydrophobic submicron particle is a treated fumed silica, such as the condensation reaction product of dimethyidihalosilane treated fumed silica.

Examples of suitable hydrophobic submicron particles include fumed silica (heat) treated with dimethyldichlorosilane, such as those available in varying particle sizes and sold by Degussa Corporation, Parsippany, New Jersey, USA, under the trademarks AEROSIL R972, AEROSIL R974, or AEROSIL R976; fumed silica treated with hexamethyldisilazane (HMDS), such as those sold by Degussa Corporation, Parsippany, New Jersey, USA under the trademark AEROSIL RX 50; silanized zinc oxides, such as those sold by Degussa Corporation, Parsippany, New Jersey, USA under the trademark VP AD NANO Z 805; aluminum oxides, such as a 30 wt% dispersion of 20 nm Al₂O₃ in water like that sold by Nanophase Technologies, Romeoville, Illinois, USA under the trademark NANOARC L-2255, or a 55 wt % dispersion of 250 nm Al₂O₃ in water like that sold by Nanophase Technologies, Romeoville, Illinois, USA under the trademark NANOARC AL-2350, or a 55 wt % dispersion of 800 nm Al₂O₃ in water like that sold by Nanophase Technologies, Romeoville, Illinois, USA under the trademark NANOARC AL-2850; pyrogenic aluminium oxide treated with octylsilane, such as those sold by Degussa Corporation, Parsippany, New Jersey, USA under the trademark ALU C 805 AEROXIDE; dichlordimethylsilane modified pyrogenic silica, such as those sold by Degussa Corporation, Parsippany, New Jersey, USA under the trademark AEROXIDE LE2; highly dispersed hydrophobic titanium dioxides, such as those sold by Degussa Corporation, Parsippany, New Jersey, USA under the trademark AEROXIDE T 805; and hydrophobic fumed silicas, such as those sold by Degussa Corporation, Parsippany, New Jersey, USA under the trademarks AEROSIL R8200, AEROSIL R9200 and AEROSIL R504.

In some embodiments, the one or more hydrophobic submicron particles may be added in an amount from about 0.01 wt% to about 2.0 wt. %, based on the total weight of the powder coating resin system, or up to about 1.0 wt %, to insure coating clarity, or, more preferably, up to about 0.5 wt%, or, even more preferably, up to about 0.3 wt %. In some embodiments, the hydrophobic submicron particles are preferably added in an amount from about 0.05 wt% or more.

Non-limiting examples of nonaqueous solvents include toluene, xylene, ethyl acetate, butyl acetate, propyl acetate, methyl amyl ketone, isoamyl acetate, methyl ethyl ketone, methyl isobutyl ketone, and mixtures thereof. In some embodiments, the nonaqueous solvent does not include supercritical carbon dioxide.

In some embodiments, one or more initiators suitable for use during the polymerization step may include, but are not limited to, thermal or radical initiators. Non-limiting examples of such initiators include tert-butyl peroxy-2-ethylhexanoate, tert-amyl peroxy-2-ethylhexanoate, tert-butyl peroxydiethylacetate,tert-butyl peroxyisobutyrate, benzoyl peroxide, t-butyl hydroperoxide, tertiary butyl perbenzoate, cumene peroxide, dimethylazobis-isobutyrate, 2,2'-Azobis(2-methylbutyronitrile), 2,2'-azobis(2,4-dimethyl-pentanenitrile), 2,2'-azobis-(2-methylpropanenitrile), t-butyl peroxy pivalate, and mixtures thereof. In some of such embodiments, one or more of the polymerization initiators are used to prepare the acrylic polymer composition in an amount ranging from about 0.5 wt% to about 9 wt. %, based on the total weight of the monomers, or in another embodiment preferably from about 5 wt % to about 8 wt%, or, and in yet another embodiment more preferably, from about 6 wt to about 7.5 wt %.

In some embodiments, additional hydrophobic submicron particles may be added to the powder coating composition before or during intimate mixing or resin particle agglomeration to form powder coating compositions in addition to the amount of hydrophobic submicron particles added during the synthesis of the polymer. These additional hydrophobic submicron particles also become part of the powder coating particle or agglomerate. In addition, a portion of the one or more hydrophobic submicron particles, not to exceed 300 wt. % of the total amount of hydrophobic submicron particles used, may be post-blended or dry blended, i.e. as separate particles, with the admixed powder coating composition. Accordingly, in some embodiments, the upper limit of the amount of hydrophobic submicron particles added to the acrylic polymer is about 2 wt%. Hence, in some embodiments, the upper limit of the amount of submicron particles in the post-blended or dry blended is about 0.6 wt%.

The acrylic copolymers are obtained from acrylic monomers. At least one acrylic monomer is chosen from epoxy functional monomers, acid functional monomers or combinations thereof, and optionally hydroxyl functional monomers. In some embodiments, one or more monomers may be selected so that the acrylic copolymer exhibits a glass transition temperature (T_{g}) to ensure adequate blocking resistance and/or package stability without compromising flow and film-forming properties. In some embodiments, the acrylic copolymers may have a T_{g} in a range from about 40 degrees Celsius (°C) to about 90 °C, and, preferably, more than about 50 °C.

In some embodiments, the copolymers are acrylic copolymers formed from one or more epoxy functional monomers and one or more vinyl or acrylic comonomers, and preferably that are formed from a comonomer which would itself form a homopolymer having a T_{g} ranging from about 25 °C to about 175 °C, or more preferably more than about 50 °C.

Hydroxyl functional monomers include ethylenically unsaturated monomers containing one or more hydroxyl groups. Non-limiting examples of hydroxyl monomers include hydroxyethyl acrylate, hydroxybutyl acrylate, hydroxypropyl acrylate, hydroxyethyl methacrylate, hydroxybutyl methacrylate and hydroxypropyl methacrylate.

Non-limiting examples of acid monomers include ethylenically unsaturated monomers containing one or more acid moieties such as carboxylic acid groups, phosphorus acid groups, sulfonic acid groups. Examples of acid monomers include carboxylic acid monomers such as (meth)acrylic acid, crotonic acid, itaconic acid, fumaric acid, maleic acid, monomethyl itaconate, monomethyl fumarate, and monobutyl fumarate; phosphorus acid monomers such as phosphoethyl(meth)acrylate; and sulfur acid monomers such as sodium vinyl sulfonate, and acrylamido propane sulfonate.

In some embodiments, the acrylic copolymers may be any chosen from one or more epoxy functional acrylic copolymers having a T_{g} of from about 40 °C to about 90 °C. The one or more epoxy functional acrylic copolymers may comprise the copolymerization product of from about 10 to about 40 wt%, based on the total monomers to be copolymerized, of one or more epoxy functional unsaturated monomers, e.g. glycidyl(meth)acrylate, and one or more vinyl or acrylic comonomers, preferably a comonomer which would itself form a homopolymer having a glass transition temperature (T_{g}) of about 25 °C to about 175 °C. If the amount of the epoxy functional unsaturated monomer used is less than about 10 wt%, based on the total weight of copolymerized monomers, it does not measurably contribute to an improvement of solvent resistance and mechanical strength. On the other hand, if the amount exceeds about 40 wt% on the same basis, no additional improvement in corrosion resistance is obtained.

In some embodiments, the acrylic copolymers are one or more acid functional acrylic copolymers. The one or more carboxylic acid functional acrylic copolymers may include any copolymer having a weight average molecular weight of between about 1000 and about 30,000, and a carboxylic acid equivalent weight of from about 300 to about 1000, preferably at least about 500, the copolymerization product of from 2.5 to 25 wt%, based on the total weight of copolymerized monomers, of one or more α-β ethylenically unsaturated carboxylic acid, and one or more vinyl or acrylic comonomer, preferably a comonomer that would itself form a homopolymer having a glass transition temperature (T_{g}) of 25 °C to 175 °C. Non-limiting examples of carboxylic acid functional acrylic copolymers may include acrylic resins sold under by BASF Corporation of Wyandotte, Michigan, USA, under the trademarks JONCRYL 819 and JONCRYL 821.

In some embodiments, the acrylic copolymers are one or more phosphorus acid functional acrylic copolymers. The phosphorus acid functional acrylic copolymers may comprise the copolymerization product of from 0.5 to 10 wt. %, preferably, 1 to 5 wt. %, based on the total weight of copolymerized monomers, of one or more phosphorus acid monomer, and of one or more vinyl or acrylic comonomer, preferably, a comonomer which would itself form a homopolymer having a glass transition temperature (Tg) of 25°C to 175°C The phosphorus acid functional acrylic copolymer may further comprise the copolymerization product of up to 10 wt. %, preferably, from 1 to 5 wt. %, based on the total weight of copolymerized monomers, of one or more α-β ethylenically unsaturated carboxylic acid. The acrylic copolymer may comprise mixtures of one or more phosphorus acid functional acrylic copolymer and one or more epoxy functional acrylic copolymer.

In some embodiments, epoxy functional unsaturated monomers suitable for preparing the acrylic resins may include, for example, one or more glycidyl ester of α-β ethylenically unsaturated carboxylic acids, such as (meth)acrylic, maleic or itaconic acid, and allyl glycidyl ethers. Preferably, the epoxy functional monomer is chosen from glycidyl(meth)acrylate monomers of the formula H₂C=C(R⁸)C(O)OR⁹, wherein R⁸ is H or a lower alkyl group and R⁹ is a glycidyl terminal, branched or unbranched alkylene residue containing from 1 to 4 carbon atoms, i.e. the glycidyl ring lies at the end distal to the unsaturation. Illustrative compounds within the definition of the formula are glycidyl acrylate, glycidyl(meth)acrylate, and 1,2-epoxybutylacrylate, preferably, glycidyl(meth)acrylate of formula, wherein R⁸ is methyl and R⁹ is a glycidyl methylene group. Glycidyl(meth)acrylate monomers may comprise a mixture of monomers. Glycidyl(meth)acrylate, can be obtained commercially from Dow Chemical Company (Midland, Michigan) or it can be prepared under reaction conditions known to those of skill in the art.

Suitable α-β ethylenically unsaturated carboxylic acid monomers may include, for example, acrylic acid, methacrylic acid, acryloxypropionic acid, crotonic acid, fumaric acid, monoalkyl esters of fumaric acid, maleic acid, monoalkyl esters of maleic acid, itaconic acid, monoalkyl esters of itaconic acid and mixtures thereof.

Suitable phosphorus acid monomers for making the phosphorus acid functional acrylic copolymer can be any α-β ethylenically unsaturated monomer having a phosphorus acid group and may be in the acid form or as the salt of the phosphorus acid group. In some embodiments, such phosphorus acid monomers may include phosphate esters of polyethylene glycol mono(meth)acrylate or phosphate esters of polypropylene glycol mono(meth)acrylate. In some embodiments, phosphorus acid monomers may include phosphoalkyl(meth)acrylates such as phosphoethyl(meth)acrylate, phosphopropyl(meth)acrylate, and phosphobutyl(meth)acrylate, phosphoalkyl crotonates, phosphoalkyl maleates, phosphoalkyl famarates, phosphodialkyl(meth)acrylates, phosphodialkyl crotonates, vinyl phosphates, and (meth)allyl phosphate. Preferred are phosphoalkyl methacrylates. Other suitable phosphorus acid monomers may include dihydrogen phosphate-functional monomers such as allyl phosphate, mono-or diphosphate of bis(hydroxymethyl)fumarate or itaconate; phosphonate functional monomers, including, for example, vinyl phosphonic acid, allyl phosphonic acid, 2-acrylamido-2-methylpropanephosphonic acid, a-phosphonostyrene, 2-methylacrylamido-2-methylpropanephosphonic acid; 1,2-ethylenically unsaturated (hydroxy)phosphinylalkyl(meth)acrylate monomers; and oligomeric phosphorus acid monomers, such as diphosphomonoalkyl(meth)acrylates, i.e. (meth)acryloyloxyalkyl diphosphate, triphosphomonoalkyl (meth)acrylates, metaphosphomonoalkyl(meth)acrylates and polyphosphomonoalkyl(meth)acrylates.

In some embodiments, the phosphorus acid functional acrylic copolymer may be prepared by first preparing a precursor polymer which contains a pendant first co-reactive epoxy group which can be reacted with a compound containing a second co-reactive group and a phosphorus acid group. For example one can prepare a precursor polymer using glycidyl(meth)acrylate. Suitable second co-reactive groups on the compound including a second co-reactive group and phosphorus acid group are amine, hydroxyl, and phosphoric acid anhydride. An epoxy functional precursor polymer can be reacted with polyphosphoric acid, or glyphosate to generate a phosphorus acid functional acrylic copolymer with internal pendant phosphorus acid groups.

Suitable comonomers may include one or more nonionic acrylic, vinyl or allyl monomer chosen from alkyl(meth)acrylates, cycloalkyl(meth)acrylates, alkyl aryl(meth)acrylates, vinyl esters, alkyl vinyl ethers, (meth)acrylonitriles, (meth)acrylamides, dialkyl esters of unsaturated dibasic acids, and mixtures thereof. Suitable examples of an acrylic comonomer may be, for example, a C₁ to C₂₀ (cyclo)alkyl ester of (meth)acrylic acid, such as methyl(meth)acrylate, ethyl(meth)acrylate, n-butyl(meth)acrylate, isobutyl(meth)acrylate, and t-butyl(meth)acrylate, 2-ethylhexyl(meth)acrylate, cyclohexyl(meth)acrylate, lauryl(meth)acrylate, stearyl(meth)acrylate, dicyclopentadienyl(meth)acrylate, dicyclopentanylmethacrylate, norbornyl(meth)acrylate, isobornyl(meth)acrylate, higher alkyl esters of (meth)acrylic acid, such as eicosyl(meth)acrylate, cetyl(meth)acrylate, tridecyl(meth)acrylate, and mixtures thereof; benzyl(meth)acrylate and phenyl(meth)acrylate. Suitable vinyl comonomers may include, for example, styrene, α-methyl styrene, α-ethylstyrene, vinyl toluene, divinyl benzene, vinyl esters, e.g. vinyl acetates, vinyl ethers, allyl ethers, allyl alcohols, and mixtures thereof. Preferably, the comonomer comprises one or more C₁ to C₈ (cyclo)alkyl ester of (meth)acrylic acid, such as methyl methacrylate, 2-ethylhexyl methacrylate, and isobutyl acrylate.

Suitable mixtures of acrylic copolymers may comprise one or more epoxy functional acrylic copolymer mixed with one or more acrylic copolymer chosen from acid functional acrylic copolymers, such as carboxylic acid and/or phosphorus acid functional acrylic copolymers, hydroxyl functional copolymers and epoxy functional acrylic copolymers.

In some embodiments, the acrylic polymers prepared according to the processes disclosed herein may have an epoxy equivalent weight (EEW) from about 250 to about 750. In some other embodiments, the EEW may be in the range from about 270 to about 620. For purposes of the present disclosure, the epoxy equivalent weight may be determined by titration with a solution of perchloric acid in glacial acetic acid according to the ASTM method D-1652-04 "Standard Test Method for Epoxy Content of Epoxy Resins", ASTM International, 100 Barr Harbor Drive, West Conshohocken, PA.

The acrylic polymers disclosed herein may be included in powder coating compositions. In some embodiments, powder coating compositions may comprise from about 5 to about 35 wt%, based on the total weight of the powder coating composition, of one or more crosslinkers. The crosslinker is added in a stoichiometry of about 0.75:1 to about 1.25:1 acid to epoxy, preferably about 0.95 to about 1.05:1. Any crosslinker that reacts with epoxy groups may be included. Example crosslinkers for epoxy functional acrylic polymers include organic dicarboxylic acids and their anhydrides such as sebacic acid, dodecanedioic acid, and adducts made from esterification of organic dicarboxylic acids or anhydrides with polyesters. The crosslinkers add to coating flexibility and may enhance chip resistance. In some embodiments, crosslinkers for acid functional acrylic copolymer powder coating compositions may comprise a polyepoxy crosslinker, such as triglycidyl isocyanurate (TGIC), bisphenol A epoxy resins, or epoxy phenol novolak.

The adhesion promoter may additionally comprise an epoxy resin or isocyanate compound or prepolymer adhesion promoter having a T_{g} of about 40 °C or higher. Examples include epoxy resins, epoxy-phenolic novolak resins; dimers and trimers of isophorone diisocyanate (IPDI), hexamethylene diisocyanate (HMDI) or toluene diisocyanate, blocked isocyanates, such as caprolactam blocked IPDI, and isocyanate terminated prepolymers of diisocyanates or their dimers or trimers with a polyol or glycol. Preferred adhesion promoters are bisphenol epoxy resins, more preferably bisphenol A or bisphenol F epoxy resins. The presence of an epoxy adhesion promoter can improve CASS (copper accelerated salt spray) corrosion resistance versus the same powder without the adhesion promoter. In an embodiment, suitable amounts of adhesion promoter may range up to about 10 wt%, based on the total weight of the powder coating composition, in another embodiment from about 0.01 wt% to about 10 wt%, preferably from about 0.2 to about 3 wt%, or, more preferably, up to about 1 wt%. Amounts of greater than about 3 wt% can contribute to weatherability problems.

The powder coating composition may incorporate minor amounts of other components known in the art including, for example, in an embodiment, from about 0.1 to about 15 phr, in another embodiment preferably up to 5 phr, and, in yet another embodiment about 0.1 to about 5 phr, of one or more ultraviolet light stabilizer or light absorber to aid in weatherability. Suitable light stabilizers include, for example, hindered amines, such as dimethyl succinate polymer with 4-hydroxy tetramethyl piperidine ethanol, hindered phenols or combinations comprising at least one of the foregoing light stabilizers.

Hydrolyzable silanes (for example, alkoxysilanes) may be used in an amount from about 0.01 to about 3 wt%, preferably, about 0.3 wt% or less, based on the total weight of the powder coating composition to couple the hydrophobic submicron particle into the coating matrix. Non-limiting examples of suitable silanes include glycidyl alkoxy silanes and amino alkoxy silanes, such as glycidyl trimethoxy silane.

Small amounts, e.g. up to about 0.10 wt%, based on the total weight of the powder coating composition, preferably, up to 0.05 wt% and more preferably 0.01 wt% to 0.10 wt%, of organic pigments, such as phthalo-cyanines may be included to control yellowing. The powder coating composition may additionally comprise any of from about 0.001 to about 1.0 wt%, based on the total weight of the powder coating composition, of optical brighteners and/or leveling agents; from about 0.1 to about about 10 phr, based on the total weight of the powder coating composition, of one or more flatting agent, such as alkyl(meth)acrylate copolymers, up to about 6 phr and preferably about 0.01 phr to about 6 phr of one or more wax; and from about 0.01 wt% to about 1.0 wt%, based on the total weight of the powder coating composition, of post blend additives, such as dry flow additives like silica or fume alumina.

The powder coating resin systems disclosed herein may be mixed with one or more crosslinking agents and may be subject to additional processing to form a powder coating composition. The process may further comprise dry blending, grinding and extruding the resultant hydrophobic submicron particle-containing acrylic powder coating composition. Powder coating compositions including the acrylic resins according to the processes disclosed herein may be produced according to conventional methods. The components may be blended, and then intimately mixed, such as, for example, by melt-compounding so that no significant curing occurs. A molten compound may be extruded then rapidly cooled, followed by grinding and, if necessary, sorting the particulates according to size. Alternatively, the powder coating compositions may be produced by bonding the acrylic copolymer particles with hydrophobic submicron particles to form agglomerate particles.

The powder coating compositions may be applied via conventional means. For electrostatic coating, the average size of the particles may range from about 5µm to about 200 µm, preferably about 25 µm or more, or, about 75 µm or less.

Once applied the coatings are cured thermally, for example, at temperatures of from about 90 °C to about 250 °C for a period of from 30 seconds to 90 minutes. Heat for thermal cure may come from a convection, infrared (IR) or near IR source.

In some embodiments, the coatings are applied to metal substrates. Suitable substrates include aluminum, forged alloys, iron, steel, magnesium alloy, electronic goods, and brass, such as lock and door hardware. Example aluminum substrates include aluminum silicon alloys, aluminum lithium alloys, aluminum magnesium, aluminum zinc, aluminum manganese, aluminum copper base alloys such as aluminum bronze, and the like. The alloys may be single, binary, or have more than two metals.

Preferably, the substrates are pretreated. Aluminum and forged alloy substrates may be pretreated with, for example, a non-chrome self-assembled monolayer of phosphorus organic material, zirconium titanates, or acrylic modified zirconium titanate. Steel and iron substrates may be pretreated with passivating agents, such as zinc phosphate or iron phosphate.

Non-limiting examples of the acrylic polymers and coating compositions disclosed herein are provided below.

### EXAMPLES

### Example 1

An example process for making the acrylic polymer containing fumed silica is as follows. 789.3 grams of toluene and 15.0 grams of AEROSIL R972 was charged to a 4-necked 5-liter round bottom glass reactor equipped with a mechanical stirrer, a condenser, a nitrogen inlet and bubbler, a temperature measuring probe and a monomer/initiator feed tube. The flask was heated under reflux (at approximately 111 °C) with a nitrogen atmosphere. A monomer mixture was prepared by adding 315 grams of butyl methacrylate, 433 grams of glycidyl methacrylate, 204.5 grams of Isobornyl methacrylate, 525 grams of methyl methacrylate, 60 grams of styrene and 159.4 grams of toluene in a 5-liter container. An initiator solution was prepared by mixing 112.9 grams of TRIGONOX® 21S (tert-butyl peroxy-2-ethylhexanoate, sold by Akzo Nobel Polymer Chemicals LLC, Chicago, Illinois, USA) initiator and 153.3 grams of toluene. The monomer mixture and the initiator mixture were combined in one container. The nitrogen flow was turned off to the reactor. The monomer and initiator mixture was fed into the reactor over 4 hours. When the monomer and initiator feed was completed the feed line was rinsed with 34.7 grams of toluene. The reaction mixture was maintained at approximately 113°C for 30 minutes. A mixture of 8.25 grams of TRIGONOX® 21S in 93.8 grams of toluene was added to the flask over 60 minutes. When the addition of TRIGONOX® 21S solution was completed the line was rinsed with 7.5 grams of toluene. The reaction was maintained at approximately 113 °C for an additional 30 minutes and then cooled to room temperature. The resin was then transferred to a stripping reactor where itwas heated under vacuum to 155 °C to 165 °C and held at 155 °C to 165 °C for one hour. During this period the solvent was distilled off the resin, resulting in a resin with greater than 99 percent solids content.

### Example 2

Example testing formulations are as shown in Table 1:

| TABLE 1 | | | | | | |
|---|---|---|---|---|---|---|
| | Component (in PHR) | Sample 1 | Sample 2 | Comparativ e Sample A | Comparativ e Sample B | Comparativ e Sample C |
| 1 | Experimental resin #1 (GMA acrylic) with 1.0% Aerosil R972 | 84.000 | | | | |
| 2 | Experimental resin #2 (GMA acrylic) with 0.4% Aerosil R972 | | 84.000 | | | |
| 3 | Experimental resin #3 (GMA acrylic) with no Aerosil R972 | | | 84.000 | 84.000 | 84.000 |
| 4 | Sebacic acid | 16.000 | 16.000 | 16.000 | 16.000 | 16.000 |
| 5 | Acrylate copolymer flow modifier | 1.000 | 1.000 | 1.000 | 1.000 | 1.000 |
| 6 | Benzoin | 1.000 | 1.000 | 1.000 | 1.000 | 1.000 |
| 7 | Dimethyl succinate polymer with 4-hydroxy tetramethyl piperidine ethanol | 0.500 | 0.500 | 0.500 | 0.500 | 0.500 |
| 8 | Triazine | 0.500 | 0.500 | 0.500 | 0.500 | 0.500 |
| 9 | Octadecyl 3,5-Di(tert)-butyl-4-hydroxyhydrocinnamate | 0.350 | 0.350 | 0.350 | 0.350 | 0.350 |
| 10 | Organophosphite | 0.350 | 0.350 | 0.350 | 0.350 | 0.350 |
| 11 | Bis Benzoxazole | 0.002 | 0.002 | 0.002 | 0.002 | 0.002 |
| 12 | Dioxazine violet | 0.00003 | 0.00003 | 0.00003 | 0.00003 | 0.00003 |
| 13 | AEROSIL R972 - post blended | | | | 0.40% | 1.00% |
| 14 | Fumed aluminum oxide - Dry Flow | 0.20% | 0.20% | 0.20% | 0.20% | |

The samples above were prepared by mixing components 1 through 12 in a bag and dry blending them. The mixture was then mixed in a mixer for 30 seconds at 2,000 rpm. The resulting mixture was extruded at 200 °F (about 93 degrees Celsius) at 400 rpm. The extruded material was ground at high speed in a Brinkman grinder and sieved through 100 mesh. The resulting formulated powder coating composition was electrostatically sprayed. The difference between Experimental Resin # 1 and Experimental Resin #2 is the amount of AEROSIL R972 present during the reaction. Examples containing components 13 and 14 had the amounts of these components calculated based on the weight of material obtained after extrusion. Components 13 and 14 were dry blended in a bag with the material after extrusion and then processed as the other examples.

### Example 3

Samples of acrylic powder coating compositions prepared according to the inventive method (in-process) are shown below, compared to acrylic powder coating compositions where the silica is added post-blend (as additive to bag blend). That is, glycidyl methacrylate (GMA) acrylic resins were made by adding fumed silica during polymerization of the polymer resin compared to compositions where the fumed silica was added to the bag blend of the GMA acrylic resins.

| Sampl e No. | Resin Type | Method of Addition | Pencil Hardnes s (Scratch) ASTM D3363 | Haze Intensit y | Wave-scan Plus Smoothness - L | Wave-scan Plus Smoothness - S | Wave-scan Plus Smoothness - R |
|---|---|---|---|---|---|---|---|
| Contro l | GMA Control (no silica) | N/A | F | 3 | 7.1 | 12.1 | 7.4 |
| 1 | GMA + 0.4% R-972 Silica | In-Process | F | 4 | 7.4 | 13.8 | 7.5 |
| 2 | GMA + 1.0% R-972 Silica | In-Process | H | 4 | 7.3 | 12.9 | 7.5 |
| 3 | GMA + 0.4% R-972 Silica | As Additive to Bag Blend | H | 7 | 12.0 | 22.4 | 6.4 |
| 4 | GMA + 1.0% R-972 Silica | As Additive to Bag Blend | H | 7 | 12.2 | 22.3 | 6.4 |

| | | | | | | | |
|---|---|---|---|---|---|---|---|
| For Pencil Hardness, a "H" rating constitutes an increase in resistance to mechanical deformation compared to a rating of "F". Relative Haze Intensity Range: 0-10 with 0 being no haze, 3 being very slight haze, 4 being slight haze and 7 being moderate to severe haze. BYK Wavescan Smoothness Ranges: L (long-term waviness, orange peel) 0-99.9 with 0 being no orange peel S (short-term waviness or microtexture) 0-99.9 with 0 having no microtexture R (overall rating) 0-10.5, 10.5 being the smoothest | | | | | | | |

As shown, resin types prepared according to the inventive process exhibited haze and smoothness compared to similar resin types prepared with the addition of silica added post-blend.

All phrases comprising parenthesis denote either or both of the included parenthetical matter and its absence. For example, the phrase "(co)polymer" includes, in the alternative, polymer, copolymer and mixtures thereof.

Unless otherwise noted, all processes refer to and all examples were performed under conditions of standard temperature and pressure (STP).

All ranges cited herein are inclusive and combinable. For example, if an ingredient may be present in amounts of about 0.05 wt% or more to about 1.0 wt %, and in amounts up to about 0.5 wt%, then that ingredient may be present in amounts of from about 0.05 to about 1.0 wt%, from about 0.5 to about 1.0 wt% or from about 0.05 to about 0.5 wt%.

As used herein, the term "average particle size" shall mean, unless otherwise indicated, the particle diameter or the largest dimension of a particle in a distribution of particles as determined by laser light scattering using a Malvern Mastersizer(TM) 2000 instrument (Malvern Instruments Inc., Southboro, Mass.) per manufacturer's recommended procedures.

As used herein, unless otherwise indicated, the term "glass transition temperature" or "T_{g}" of any resin or (co)polymer is measured using differential scanning calorimetry (DSC) (rate of heating of 20 °C per minute), the Tg being taken at the midpoint of the inflection. T_{g} may alternatively be calculated as described by Fox in Bull. Amer. Physics. Soc., 1, 3, page 123 (1956).

As used herein, the term "hybrid" of any (co)polymer or resin shall refer to adducts, grafts or block copolymers and compatible or compatibilized blends of such (co)polymers or resins, such as epoxy polyester hybrids.

As used herein, the term "intimate dispersed mixture" refers to a method by which the polymer or resin is prepared in the presence of hydrophobic submicron particles. The hydrophobic submicron particles are present in the reactor before the monomer(s), initiators and additives are added to the reactor.

As used herein, unless otherwise indicated, the term "molecular weight" refers to the number average molecular weight of a polymer as measured by gel permeation chromatography (GPC) calibrated with polystyrene standards.

As used herein, the term "oligoorganosiloxane" includes any number from 2 to 20 siloxane units and the prefix "polyorganosiloxane" includes more than 20 siloxane units.

As used herein, the term "phr" means the amount, by weight, of an ingredient per hundred parts, by weight, of the resin system. The resin system includes resin or polymer and crosslinking or curing agent.

As used herein, the term "polymer" includes random, block, segmented and graft copolymers, and any mixture or combination thereof.

As used herein, the terms "resin" and "polymer" are interchangeable.

As used herein, the term "resin system" refers to the total of epoxy resin, toughening resin and any crosslinker, curing agent or hardener (but not catalyst) which becomes an integral part of the cross-linked structure.

Herein, unless otherwise noted, all percentages are by weight.

All documents cited in the Detailed Description, in relevant part, incorporated herein by reference to the extent not inconsistent with the present disclosure. The citation of any document herein should not be construed as an admission that it is prior art with respect to the present invention.

It will be obvious to those having skill in the art that many changes may be made to the details of the above-described embodiments without departing from the underlying principles of the invention. The scope of the present invention should, therefore, be determined only by the following claims.

## Claims

1. A process for preparing an acrylic powder coating resin system comprising solution polymerizing at least one acrylic monomer in a non-aqueous solvent in the presence of a hydrophobic submicron particle and an initiator, wherein the at least one acrylic monomer is chosen from epoxy functional monomers, acid functional monomers or combinations thereof, and wherein the polymerizing occurs under water-free conditions.

2. The process of claim 1 wherein the at least one monomer is epoxy functional and is chosen from glycidyl methacrylate or glycidyl acrylate.

3. The process of any one of claims 1 to 2 wherein the at least one monomer is included in an amount from about 10 wt% to about 40 wt%, based on the total monomers to be copolymerized.

4. The process of any one of claims 1 to 3 wherein the one or more acrylic polymer resin systems is epoxy functional and has an EEW from about 250 to about 750.

5. The process of any one of claims 1 to 4 wherein the non-aqueous solvent is selected from the group consisting of toluene, xylene, ethyl acetate, butyl acetate, propyl acetate, methyl amyl ketone, isoamyl acetate , methyl ethyl ketone, methyl isobutyl ketone and mixtures thereof.

6. The process of any one of claims 1 to 5 wherein the one or more hydrophobic submicron particles each comprise an inorganic oxide and one or more organosilicon compounds.

7. The process of claim 6 wherein the inorganic oxide particle is selected from the group consisting of silica, fumed silica, metal oxides, silicates, organic-inorganic oxide composites and mixtures thereof.

8. The process of claim 7 wherein the one or more hydrophobic submicron particles is treated fumed silica formed from the condensation reaction product of dimethyidihalosilane treated fumed silica.

9. The process of any one of claims 1 to 8 wherein the one or more hydrophobic submicron particles is present in the powder coating resin system in the range from about 0.01 wt% to about 2.0 wt. %, based on the total weight of the powder coating resin system.

10. The process of any one of claims 1 to 9 wherein the one or more initiators is a thermal or radical initiator selected from the group consisting of tert-butyl peroxy-2-ethylhexanoate, tert-amyl peroxy-2-ethylhexanoate, tert-butyl peroxydiethylacetate,tert-butyl peroxyisobutyrate, benzoyl peroxide, t-butyl hydroperoxide, tertiary butyl perbenzoate, cumene peroxide, dimethylazobis-isobutyrate, 2,2'-Azobis(2-methylbutyronitrile), 2,2'-azobis(2,4-dimethyl-pentanenitrile), 2,2'-azobis-(2-methylpropanenitrile), t-butyl peroxy pivalate and mixtures thereof.

11. A process for preparing a powder coating composition comprising mixing the powder coating resin system prepared according to the process of any one of claims 1 to 10 with one or more crosslinking agents.

12. The process of claim 11 further comprising dry blending, grinding and extruding the resultant hydrophobic submicron particle-containing acrylic powder coating composition.

13. A coating on a metal substrate comprising the powder coating composition prepared according to the process of claims 11 or 12.

14. The coating of claim 13, wherein the substrate comprises aluminum or a forged alloy.

## Patentansprüche

1. Verfahren zur Herstellung eines Acrylbeschichtungspulver-Harzsystems, umfassend die Lösungspolymerisation vonmindestens ein Acrylmonomer in einem wasserfreien Lösungsmittel in Gegenwart eines hydrophoben Submikronpartikels und eines Initiators, wobei das mindestens eine Acrylmonomer ausgewählt ist aus expoxyfunktionellen Monomeren, säurefunktionellen Monomeren oder ihren Kombinationen, und wobei das Polymerisieren unter wasserfreien Bedingungen stattfindet.

2. Verfahren nach Anspruch 1, wobei das mindestens eine Monomer epoxyfunktionell ist und aus Glycidylmethacrylat oder Glycidylacrylat ausgewählt ist.

3. Verfahren nach einem der Ansprüche 1 bis 2, wobei das mindestens eine Monomer in einer Menge von etwa 10 Gew.% bis etwa 40 Gew.%, basierend auf den zu copolymerisierenden Gesamtmonomeren, enthalten ist.

4. Verfahren nach einem der Ansprüche 1 bis 3, wobei das eine oder die mehreren Acrylpolymer-Harzsysteme epoxyfunktionell sind und einen EEW von etwa 250 bis etwa 750 haben.

5. Verfahren nach einem der Ansprüche 1 bis 4, wobei das wasserfreie Lösungsmittel aus der Gruppe ausgewählt ist, bestehend aus Toluol, Xylol, Ethylacetat, Butylacetat, Propylacetat, Methylamylketon, Isoamylacetat, Methylethylketon, Methylisobutylketon und ihren Mischungen.

6. Verfahren nach einem der Ansprüche 1 bis 5, wobei der eine oder die mehreren hydrophoben Submikronpartikel jeweils ein anorganisches Oxid und eine oder mehrere Organo-Siliziumverbindungen umfassen.

7. Verfahren nach Anspruch 6, wobei der anorganische Oxidpartikel aus der Gruppe ausgewählt ist, bestehend aus Siliciumdioxid, pyrogenem Siliciumdioxid, Metalloxiden, Silikaten, organisch-anorganischen OxidVerbindungen und ihren Mischungen.

8. Verfahren nach Anspruch 7, wobei der eine oder die mehreren hydrophoben Submikronpartikel nachbehandeltes pyrogenes Siliciumdioxid sind, das aus dem Kondensationsreaktionsprodukt von mit Dimethyldihalosilan nachbehandeltem, pyrogenem Siliciumdioxid gebildet ist.

9. Verfahren nach einem der Ansprüche 1 bis 8, wobei das eine oder die mehreren hydrophoben Submikronpartikel in dem Pulverbeschichtungs-Harzsystem in dem Bereich von etwa 0,01 Gew.% bis etwa 2,0 Gew.%, basierend auf dem Gesamtgewicht des Pulverbeschichtungs-Harzsystems, vorhanden sind.

10. Verfahren nach einem der Ansprüche 1 bis 9, wobei der eine oder die mehreren Initiatoren ein thermischer Initiator oder ein Radikalinitiator sind, der aus der Gruppe ausgewählt ist, bestehend aus tert-Butyl peroxy-2-ethylhexanoat, tert-Amyl peroxy-2-ethylhexanoat, tert-Butyl peroxydiethylacetat, tert-Butyl peroxyisobutyrat, Benzoylperoxid, t-Butylhydroperoxid, tert-Butylperbenzoat, Cumolperoxid, Dimethylazobisisobutyrat, 2,2'-Azobis(2-methylbutyronitril), 2,2'-Azobis(2,4-dimethyl-pentannitril), 2,2'-Azobis-(2-methylpropannitril), t-Butyl peroxypivalat und ihren Mischungen.

11. Verfahren zur Herstellung einer Pulverbeschichtungszusammensetzung, umfassend das Mischen des Pulverbeschichtungs-Harzsystems, hergestellt im Verfahren nach einem der Ansprüche 1 bis 10 mit einem oder mehreren Vernetzungsmitteln.

12. Verfahren nach Anspruch 11, weiterhin umfassend das Trockenmischen, Vermahlen und Extrudieren der resultierenden, einen hydrophoben Submikronpartikel enthaltenden Acrylpulver-Beschichtungszusammensetzung.

13. Beschichtung auf einem Metallsubstrat, umfassend die nach dem Verfahren der Ansprüche 11 oder 12 hergestellte Pulverbeschichtungszusammensetzung.

14. Beschichtung nach Anspruch 13, wobei das Substrat Aluminium oder eine geschmiedete Legierung umfasst.

## Revendications

1. Procédé de préparation d'un système de résine de revêtement en poudre acrylique comprenant la polymérisation en solution d'au moins un monomère acrylique dans un solvant non aqueux en présence d'une particule submicronique hydrophobe et d'un initiateur, dans lequel l'au moins un monomère acrylique est choisi parmi des monomères à fonction époxy, des monomères à fonction acide ou des combinaisons de ceux-ci, et dans lequel la polymérisation se produit dans des conditions **caractérisées par** l'absence d'eau.

2. Procédé de la revendication 1, dans lequel l'au moins un monomère porte une fonction époxy et est choisi parmi le méthacrylate de glycidyle ou l'acrylate de glycidyle.

3. Procédé de l'une quelconque des revendications 1 et 2, dans lequel l'au moins un monomère est inclus en une quantité allant d'environ 10% en poids à environ 40% en poids, par rapport aux monomères totaux à copolymériser.

4. Procédé de l'une quelconque des revendications 1 à 3, dans lequel le ou les plusieurs système(s) de résine polymère acrylique porte/portent une fonction époxy et a/ont un poids équivalent d'époxy EEW allant d'environ 250 à environ 750.

5. Procédé de l'une quelconque des revendications 1 à 4, dans lequel le solvant non aqueux est choisi dans le groupe constitué de toluène, de xylène, d'acétate d'éthyle, d'acétate de butyle, d'acétate de propyle, de méthylamylcétone, d'acétate d'isoamyle, de méthyléthylcétone, de méthylisobutylcétone et de mélanges de ceux-ci.

6. Procédé de l'une quelconque des revendications 1 à 5, dans lequel la ou les plusieurs particule(s) submicronique(s) hydrophobe(s) comprend/comprennent chacune un oxyde inorganique et un ou plusieurs composé(s) d'organosilicium.

7. Procédé de la revendication 6, dans lequel la particule d'oxyde inorganique est choisie dans le groupe constitué par la silice, la silice fumée, les oxydes métalliques, les silicates, des composites d'oxydes organiques-inorganiques et des mélanges de ceux-ci.

8. Procédé de la revendication 7, dans lequel la ou les plusieurs particule(s) submicronique(s) hydrophobe(s) est/sont de la silice fumée traitée formée à partir du produit de réaction de condensation de la silice fumée traitée au diméthyldihalogénosilane.

9. Procédé de l'une quelconque des revendications 1 à 8, dans lequel la ou les plusieurs particule(s) submicronique(s) hydrophobe(s) est/sont présente(s) dans le système de résine de revêtement en poudre à raison d'environ 0,01% en poids à environ 2,0% en poids, par rapport au poids total du système de résine de revêtement en poudre.

10. Procédé de l'une quelconque des revendications 1 à 9, dans lequel le ou les plusieurs initiateur(s) est/sont un initiateur thermique ou radicalaire choisi dans le groupe constitué par le peroxy-2-éthylhexanoate de tert-butyle, le peroxy-2-éthylhexanoate de tert-amyle, le peroxydiéthylacétate de tert-butyle, le peroxyisobutyrate de tert-butyle, le peroxyde de benzoyle, l'hydroperoxyde de t-butyle, le perbenzoate de butyle tertiaire, le peroxyde de cumène, le diméthylazobis-isobutyrate, le 2,2'-Azobis(2-méthylbutyronitrile), le 2,2'-azobis(2,4-diméthylpentanenitrile), le 2,2'-azobis-(2-méthylpropanenitrile), le peroxy-pivalate de t-butyle et des mélanges de ceux-ci.

11. Procédé de préparation d'une composition de revêtement en poudre comprenant le mélange du système de résine de revêtement en poudre préparé selon le procédé de l'une quelconque des revendications 1 à 10 avec un ou plusieurs agent(s) de réticulation.

12. Procédé de la revendication 11, comprenant en outre le mélange à sec, le broyage et l'extrusion de la composition résultante de revêtement en poudre acrylique contenant des particules submicroniques hydrophobes.

13. Revêtement sur un substrat métallique comprenant la composition de revêtement en poudre préparée selon le procédé de la revendication 11 ou 12.

14. Revêtement de la revendication 13, dans lequel le substrat comprend de l'aluminium ou un alliage forgé.
